Europäisches Patentamt

European Patent Office

Office européen des brevets

(19)

(11) Numéro de publication : **0 132 177**
**B1**

(12) **FASCICULE DE BREVET EUROPÉEN**

(45) Date de publication du fascicule du brevet :
12.11.86

(51) Int. Cl.⁴ : **B 62 L** 1/12, B 62 L 1/06,
B 62 K 19/38

(21) Numéro de dépôt : **84401300.3**

(22) Date de dépôt : **21.06.84**

(54) Dispositif de montage et de fixation d'un frein sur un cycle.

(30) Priorité : 01.07.83 FR 8311017

(43) Date de publication de la demande :
23.01.85 Bulletin 85/04

(45) Mention de la délivrance du brevet :
12.11.86 Bulletin 86/46

(84) Etats contractants désignés :
BE DE GB IT LU NL

(56) Documents cités :
GB-A- 444 227

(73) Titulaire : HURET ET SES FILS Société dite:
60 Avenue Félix Faure
F-92000 Nanterre (FR)

(72) Inventeur : Coue, Maurice Emmanuel Louis
6 Résidence du Vieux Puits
F-78810 Feucherolles (FR)

(74) Mandataire : Moncheny, Michel et al
c/o Cabinet Lavoix 2 Place d'Estienne d'Orves
F-75441 Paris Cedex 09 (FR)

## Description

La présente invention concerne les dispositifs de fixation et de montage des freins sur les véhicules à deux roues et notamment les cycles.

Ces freins sont en général constitués par un étrier qui chevauche la roue que l'on souhaite freiner, et dont les deux branches portant à leurs extrémités des patins, sont articulées autour d'un axe de façon à pouvoir rapprocher ou éloigner ces patins de la jante de la roue. Dans les agencements connus, ces freins sont fixés sur le cadre du cycle, en l'occurrence sur la fourche avant ou sur une entretoise reliant les haubans du cadre, à l'arrière, par des dispositifs à vis et écrous. Un tel dispositif de fixation bien qu'il soit utilisé depuis très longtemps, présente dans cette application particulière plusieurs inconvénients :

— tout d'abord il a pour effet de compliquer les opérations de montage puisque les freins doivent être livrés avec leur vis de fixation et leur écrou serrés, et qu'il faut donc que le constructeur sépare l'écrou de la vis, engage cette dernière puis refixe l'écrou sur la vis ;

— de plus, l'accès à l'écrou n'est pas toujours aisé, étant donné sa position derrière la fourche ou derrière l'entretoise des haubans. Bien entendu, le même inconvénient subsiste lorsque les freins doivent être démontés ;

— il en résulte un coût relativement élevé, compte tenu du temps nécessaire à ces diverses opérations.

Le but de cette invention est de proposer un dispositif de montage et de fixation qui permette de remédier à ces inconvénients.

A cet effet, elle a pour objet un dispositif de fixation et de montage d'un frein sur un cycle, ce frein étant solidaire d'un support connu par exemple du GB-A-444 227 caractérisé en ce que ledit support est muni de moyens à enclenchement élastique coopérant avec des moyens complémentaires portés par la partie du cycle sur laquelle le frein doit être monté.

Suivant d'autres caractéristiques :

— le support comporte une patte et la partie du cycle sur laquelle le frein doit être monté délimite un logement de forme complémentaire dans laquelle la patte peut venir s'enclencher élastiquement ;

— ladite patte comporte une partie rigide bloquée dans le logement et une partie déformable élastiquement qui assure l'enclenchement et la retenue par rapport à ladite partie du cycle.

L'invention va être décrite plus en détail ci-dessous en se référant à un mode de réalisation représenté au dessin annexé sur lequel :

la figure 1 est une vue partielle en perspective d'un dispositif de montage d'un frein avant suivant l'invention ;

la figure 2 est une vue en perspective du support de frein utilisé à la Fig. 1 ;

la Figure 3 est une vue en coupe longitudinale de ce même support.

On voit sur le dessin, une partie d'une fourche avant 1 d'un cycle, comprenant un tube supérieur 2 d'axe X-X, se terminant par une traverse 3 à partir de laquelle s'étendent les deux branches 4 de la fourche. Dans la traverse 3 est délimité un logement 5 qui traverse cette pièce de part en part, et s'étend perpendiculairement à l'axe X-X de la fourche. Ce logement peut avoir une section constante ou bien une section qui va en se rétrécissant depuis sa partie avant vers sa partie arrière, la partie avant s'entendant comme étant dirigée vers l'avant du cycle. C'est sur cette partie avant qu'est reçu le frein.

Ce dernier qui ne sera pas décrit en détail, comprend un étrier 6 dont les deux branches 7, 8 sont articulées de façon connue et sont commandées également de façon connue au moyen d'un câble non représenté.

Ces deux branches sont rappelées vers une position écartée par un ressort de rappel 9.

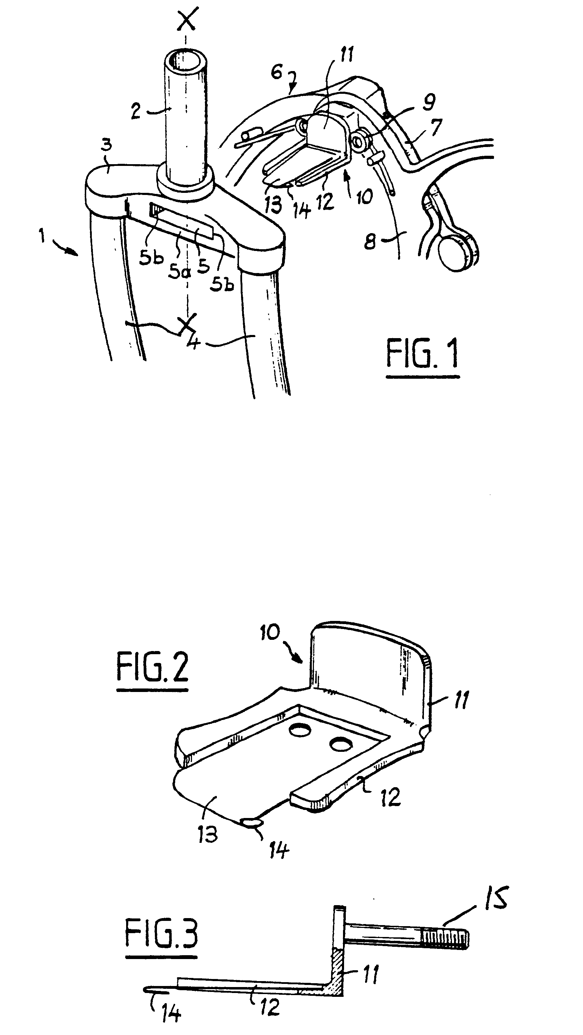

Suivant l'invention, le frein est porté par un support 10 ayant dans l'ensemble une forme en L, dont une branche 11 sert de support proprement dit pour l'étrier et dont l'autre branche 12 sert de moyen de fixation et de montage sur la fourche. La branche 11 peut porter un goujon soudé 15 (Fig. 3) servant d'axe d'articulation pour les branches de l'étrier, ou bien comporter un orifice taraudé dans lequel est vissé ledit axe d'articulation. La deuxième branche du support comporte une lame ou languette centrale 13 qui peut être rapportée ou de préférence venue de matière et qui présente une certaine élasticité perpendiculairement au plan de la branche 12. Cette lame ou languette centrale 13 comporte à son extrémité libre une partie en saillie 14 qui est destinée à constituer un encliquetage et qui vient coopérer avec le bord inférieur 5a du logement 5, lorsque le support a été engagé dans ce logement.

L'utilisation d'un tel dispositif est très simple. Le frein entièrement monté est fixé sur la fourche en engageant la patte 12 dans le logement 5. En fin de course, le crochet ou la partie en saillie 14 vient s'enclencher derrière le bord 5a, sur la traverse 3, maintenant ainsi positivement le frein par rapport à la fourche.

Le démontage s'effectue en effaçant la languette 13 pour dégager le crochet 14 et en retirant la patte 12 du logement 5.

Cette fixation offre l'avantage d'éliminer toute liaison par filetage entre le frein et la fourche et de simplifier sensiblement les opérations de montage. De plus, le logement 5 étant ménagé dans l'épaisseur de la traverse 3 de la fourche, ne nécessite aucune pièce supplémentaire.

Bien entendu, d'autres modes de réalisation peuvent être envisagés, notamment en ce qui concerne les moyens d'encliquetage : par exemple la patte 12 peut simplement comporter deux branches présentant une certaine élasticité latérale et terminées à leurs extrémités libres par des crochets venant en prise sur les bords verticaux 5b du logement 5.

Le support peut par ailleurs être venu de matière avec l'une des branches de l'étrier, diminuant encore ainsi le nombre de pièces.

Les positions de la patte et du logement peuvent être inversées, la patte étant solidaire de la fourche et le logement ménagé dans le support du frein ou dans un élément de ce frein.

La même disposition peut également être utilisée pour monter un frein arrière sur une entretoise reliant les haubans de cadre.

## Revendications

1. Dispositif de montage et de fixation d'un frein (6) sur un cycle, ce frein (6) étant solidaire d'un support (10) caractérisé en ce que ledit support (10) est muni de moyens (12, 13, 14) à enclenchement élastique coopérant avec des moyens complémentaires (5) portés par la partie (3) du cycle sur laquelle le frein doit être monté.

2. Dispositif suivant la revendication 1, caractérisé en ce que le support (10) comporte une patte (12) et la partie (3) du cycle sur laquelle le frein doit être monté délimite un logement (5) de forme complémentaire dans laquelle la patte peut venir s'enclencher élastiquement.

3. Dispositif suivant la revendication 2, caractérisé en ce que ladite patte (12) comporte une partie rigide bloquée dans le logement (5) et une partie (13) déformable élastiquement qui assure l'enclenchement et la retenue par rapport à ladite partie (3) du cycle.

4. Dispositif suivant la revendication 3, caractérisé en ce que la patte (12) comporte une partie centrale élastique (13) portant à son extrémité libre un rebord ou crochet venant en prise sur ladite partie (3) du cycle.

5. Dispositif suivant l'une quelconque des revendications 2 à 4, caractérisé en ce que la patte (12) et le logement (5) ont des formes complémentaires convergentes.

6. Dispositif suivant l'une quelconque des revendications 2 à 5, caractérisé en ce que le logement (5) est ménagé dans une traverse (3) de la fourche (1) du cycle.

7. Dispositif suivant l'une quelconque des revendications 2 à 5, caractérisé en ce que le logement (5) est ménagé dans une entretoise reliant des haubans, à l'arrière du cadre du cycle.

8. Dispositif suivant la revendication 6, caractérisé en ce que le logement (5) s'étend à peu près perpendiculairement à l'axe (X-X) de la fourche (1).

## Claims

1. A device for mounting and fixing a brake (6) on a cycle, said brake (6) being attached to a support (10), characterized in that said support (10) is provided with resiliently yieldable clipping means (12, 13, 14) engaging complementary means (5) carried by the part (3) of the cycle on which the brake must be mounted.

2. A device according to claim 1, characterized in that the support (10) comprises a tab (12) and the part (3) of the cycle on which the brake must be mounted defines a cavity (5) of complementary shape in which the tab can be resiliently clipped in position.

3. A device according to claim 2, characterized in that said tab (12) comprises a rigid portion locked in the cavity (5) and a resiliently yieldable portion (13) which ensures the clipping and the retention of the brake relative to said part (3) of the cycle.

4. A device according to claim 3, characterized in that the tab comprises a resilient central portion (13) carrying at its free end a projection or hook which clips onto said parts (3) of the cycle.

5. A device according to anyone of the claims 2 to 4, characterized in that the tab (12) and the cavity (5) have taping complementary shapes.

6. A device according to any one of the claims 2 to 5, characterized in that the cavity (5) is formed in a transverse member (3) of the fork (1) of the cycle.

7. A device according to any one of the claims 2 to 5, characterized in that the cavity (5) is formed in a brace interconnecting stays at the rear of the frame of the cycle.

8. A device according to claim 6, characterized in that the cavity (5) extends in a direction roughly perpendicular to the axis (X-X) of the fork (1).

## Patentansprüche

1. Vorrichtung zur Montage und zur Befestigung einer mit einem Halterungsteil (10) fest verbundenen Bremse (6) an einem Fahrrad, dadurch gekennzeichnet, daß das Halterungsteil (10) mit elastischen Verrastungsmitteln (12, 13, 14) ausgestattet ist, die mit komplementären Mitteln (5) zusammenwirken, die an dem Teil des Fahrrads vorgesehen sind, an dem die Bremse montiert werden soll.

2. Vorrichtung nach Anspruch 1, dadurch gekennzeichnet, daß das Halterungsteil (10) eine Klaue (12) umfaßt und der Teil (3) des Fahrrads, an dem die Bremse montiert werden soll, einen Sitz (5) mit komplementärer Form aufweist, in dem die Klaue elastisch verrastbar ist.

3. Vorrichtung nach Anspruch 2, dadurch gekennzeichnet, daß die genannte Klaue (12) einen in dem Sitz (5) arretierten starren Teil und einen elastisch verformbaren Teil (13) umfaßt, der die Verrastung und die Halterung gegenüber dem genannten Teil (3) des Fahrrads gewährleistet.

4. Vorrichtung nach Anspruch 3, dadurch gekennzeichnet, daß die Klaue (12) einen elastischen zentralen Teil (13) umfaßt, der an seinem Ende einen nach außen umgebogenen Rand oder Haken trägt, der mit dem genannten Teil (3) des Fahrrads in Eingriff kommt.

5. Vorrichtung nach einem der Ansprüche 2 bis 4, dadurch gekennzeichnet, daß die Klaue (12) und der Sitz (5) komplementäre konvergierende Formen haben.

6. Vorrichtung nach einem der Ansprüche 2 bis 5, dadurch gekennzeichnet, daß der Sitz (5) in einer Traverse der Gabel (1) des Fahrrads angebracht ist.

7. Vorrichtung nach einem der Ansprüche 2 bis 5, dadurch gekennzeichnet, daß der Sitz (5) in einem Quersteg angebracht ist, der Streben im hinteren Bereich des Fahrradrahmens miteinander verbindet.

8. Vorrichtung nach Anspruch 6, dadurch gekennzeichnet, daß der Sitz (5) annähernd senkrecht zur Achse (X-X) der Gabel (1) verläuft.

**0 132 177**

FIG. 1

FIG.2

FIG.3

1